(19) Europäisches Patentamt
European Patent Office
Office européen des brevets

(11) **EP 4 253 164 B1**

(12) **EUROPEAN PATENT SPECIFICATION**

(45) Date of publication and mention
of the grant of the patent:
**20.08.2025 Bulletin 2025/34**

(21) Application number: **21897701.5**

(22) Date of filing: **09.11.2021**

(51) International Patent Classification (IPC):
***B60R 21/36*** *(2011.01)*

(52) Cooperative Patent Classification (CPC):
**B60R 21/36**

(86) International application number:
**PCT/JP2021/041211**

(87) International publication number:
**WO 2022/113727 (02.06.2022 Gazette 2022/22)**

(54) **PEDESTRIAN-PROTECTING AIRBAG DEVICE**

AIRBAGVORRICHTUNG ZUM SCHUTZ VON FUSSGÄNGERN

DISPOSITIF COUSSIN DE SÉCURITÉ GONFLABLE DE PROTECTION DE PIÉTON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2020 JP 2020197212**

(43) Date of publication of application:
**04.10.2023 Bulletin 2023/40**

(73) Proprietor: **Autoliv Development AB**
**44783 Vargarda (SE)**

(72) Inventor: **HARADA, Tomoaki**
**Yokohama-shi, Kanagawa 222-8580 (JP)**

(74) Representative: **Müller Verweyen**
**Patentanwälte**
**Friedensallee 290**
**22763 Hamburg (DE)**

(56) References cited:
**JP-A- 2006 044 325    JP-A- 2007 196 795**
**JP-A- 2008 273 250    JP-A- 2018 016 254**
**JP-A- 2019 077 216    KR-A- 20190 059 844**

## Description

### TECHNICAL FIELD

The present invention relates to a pedestrian protection airbag device having an airbag cushion that expands and deploys from below a front hood of a vehicle towards a windshield.

### BACKGROUND TECHNOLOGY

In recent years, pedestrian protection airbag devices have been developed to protect pedestrians outside a vehicle, as an airbag device that differs from devices that restrain occupants inside the vehicle. Primarily, pedestrian protection airbag devices are configured to expand and deploy an airbag cushion from a lower side of a front hood or the like at a position where the body of a pedestrian may contact, such as a windshield or the like, when a sensor installed in a front part of the vehicle or the like detects contact with a pedestrian.

While the airbag cushion of a pedestrian protection airbag device must cover a wide area where a pedestrian may contact as a protective area, a space that can be secured on a lower side of the front hood as a storage space for the airbag cushion is limited. In this regard, for example, in a vehicle hood airbag device of Patent Document 1, an airbag 60 is divided into a left side airbag 60L' and a right side airbag 60R'. An airbag cushion with such a left-right split configuration can be folded or the like more finely than when the entire cushion is a single bag, allowing for more efficient use of limited storage space.

### Prior Art Documents

### Patent Documents

[Patent Document 1] Japanese Unexamined Patent Application 2007-196795 discloses the subject-matter according to the preamble of claim 1.

### SUMMARY OF THE INVENTION

With the technology of Patent Document 1, the left airbag 60L' and the right airbag 60R' are prevented from being displaced from each other by pressing together or increasing the thickness at a point where the left side airbag 60L' and the right side airbag 60R' mutually contact. However, airbag cushions with such a split configuration are required not only to prevent misalignment of the expansion parts, but also to prevent pedestrians and the like from falling into a valley formed between the expansion parts. If a heavy and easily accelerated part such as the head of the pedestrian and the like were to enter the valley of the expansion parts, slipping through the valley and bottoming out on the windshield or the like may occur.

### PROBLEM TO BE SOLVED BY THE INVENTION

In view of the foregoing, an object of the present invention is to provide a pedestrian protection airbag device that can achieve both ease of storage and passenger protection performance.

### MEANS FOR SOLVING THE PROBLEMS

In order to solve the aforementioned problem, a typical configuration of the pedestrian protection airbag device according to the present invention is a pedestrian protection airbag device as defined by claim 1.

According to the configuration above, the main expansion part is divided into first and second main expansion parts to achieve more compact storage, while the high friction part prevents the head of a pedestrian or the like from slipping through the valley between the first and second main expansion parts. Furthermore, the high friction part makes it difficult for the adjacent first and second main expansion parts to become displaced, thereby reducing wobbling during expansion and deployment. Therefore, with the above configuration, it is possible to achieve a pedestrian protection airbag device capable of efficiently protecting a pedestrian with a simple configuration.

The high friction part described above is formed in a range that includes the vicinity of an end part of an intermediate position of the back surface side panel in the vehicle width direction. This configuration effectively prevents the head of a pedestrian and the like from slipping through the valley between the first and second main expansion parts, and allows for more adequate protection of pedestrians.

The high friction part above is also formed on each of the end surface parts of the first and second main expansion parts facing each other at the intermediate position. This configuration effectively prevents the head of a pedestrian and the like from slipping through the valley between the first and second main expansion parts, and allows for more adequate protection of pedestrians.

A resin layer with a higher coefficient of friction than other outer front surfaces of the airbag cushion may be formed in the high friction part above. This configuration makes it possible to suitably achieve the high friction part described above.

A patch with a higher coefficient of friction than other outer front surfaces of the airbag cushion may be attached to the high friction part above. This configuration makes it possible to suitably achieve the high friction part described above.

The high friction part above may have a smaller dimension in the vehicle width direction than the dimension in the front-rear direction. By limiting the installation range of the high friction part to only necessary locations, it is possible to prevent an excessively high friction force on a pedestrian or the like and to reduce the installation cost of a high friction part.

The high friction part above may have a larger dimension in the vehicle width direction than the dimension in the front-rear direction. This configuration is not part of the present invention and makes it possible to restrain a pedestrian of a behavior moving in the vehicle width direction such that the head thereof or the like does not slip through the valley.

## EFFECT OF THE INVENTION

The present invention is capable of providing a pedestrian protection airbag device that achieves both ease of storage and pedestrian protection performance.

## BRIEF DESCRIPTION OF THE DRAWINGS

FIG. 1 is a diagram illustrating an overview of a pedestrian protection airbag device according to an embodiment of the present invention.
FIG. 2 is a diagram illustrating an example of an enlarged view of the pedestrian protection airbag device of FIG. 1(b) from above.
FIG. 3 is a diagram illustrating an example of a high friction part of the airbag cushion of FIG. 2 from various directions.
FIG. 4 is a diagram illustrating a modified example of the high friction part of FIG. 3.
FIG. 5 shows analysis results of an impactor test performed on the airbag cushion of FIG. 3(a).

## MODE FOR CARRYING OUT THE INVENTION

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

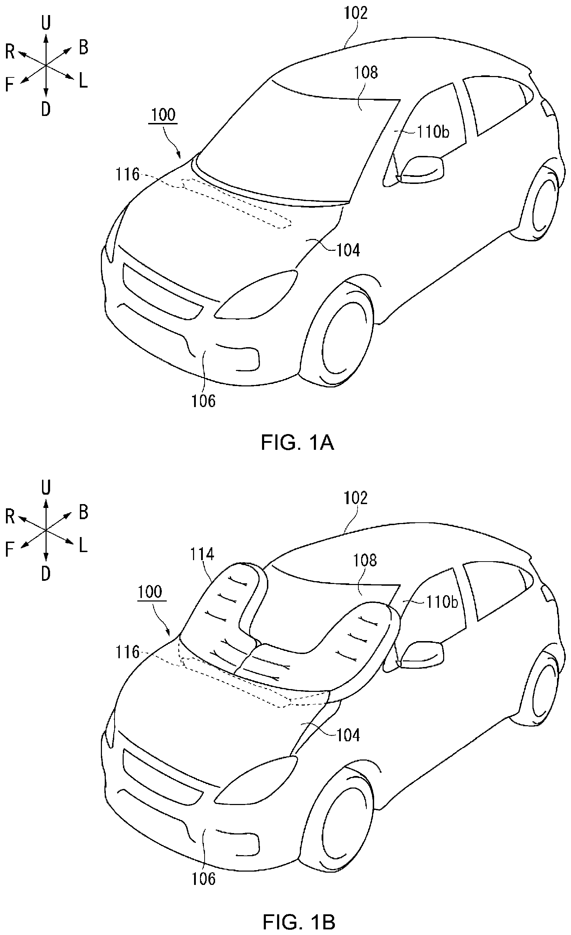

FIG. 1 is a diagram illustrating an overview of a pedestrian protection airbag device 100 according to an embodiment of the present invention. FIG. 1(a) is a diagram illustrating a vehicle before the pedestrian protection airbag device 100 is activated, and FIG. 1(b) is a diagram illustrating a vehicle when the pedestrian protection airbag device 100 is activated. Hereinafter, regarding FIG. 1 and other diagrams, a vehicle front-rear direction is illustrated by the symbols F (Front) and B (Back), a vehicle width direction by the symbols L (Left) and R (Right), and a vehicle up-down direction by the symbols U (Up) and D (Down).

As illustrated in FIG. 1(a), the pedestrian protection airbag device 100 is installed below a front hood 104 of a vehicle 102. The pedestrian protection airbag device 100 is equipped with a sensor, (not illustrated), at a location where a leg or the like of a pedestrian is likely to come into contact, for example, inside the vicinity of a front bumper 106. The device is configured such that when the sensor detects contact with a pedestrian, an activation signal is sent to gas generating devices known as inflators 112a, 112b via a controller or the like, and an airbag cushion 114 expands and deploys from below the front hood 104 toward a windshield 108, as illustrated in FIG. 1(b).

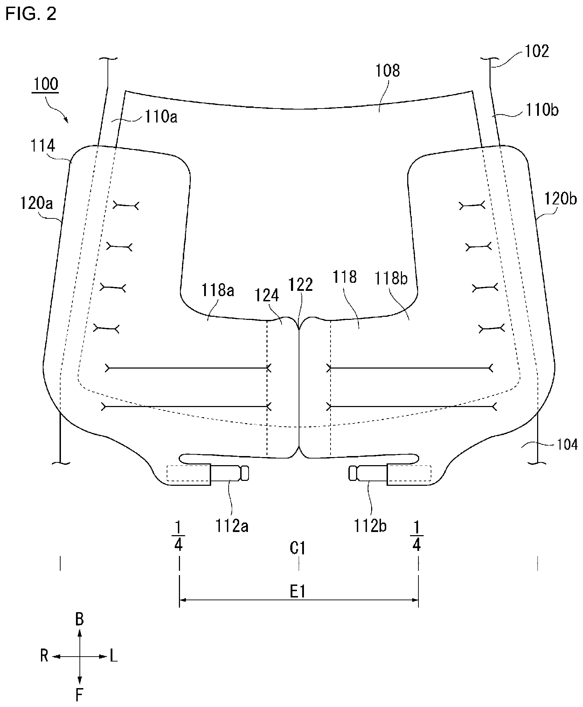

As illustrated in FIG. 1(a), the pedestrian protection airbag device 100 includes a housing 116, in which an airbag cushion 114 is stored. The housing 116 is a long, box-like container primarily formed of resin, which stores the airbag cushion 114 (see FIG. 2), the inflator 112a, 112b, and the like. The housing 116 is mounted on the underside of the front hood 104 via a special bracket or the like, with the longitudinal direction thereof facing the vehicle width direction.

As illustrated in FIG. 1(b), the airbag cushion 114 in this embodiment expands and deploys along the windshield 108 to stop pedestrians that are about to contact the windshield 108. In addition, the airbag cushion 114 can be configured to lift and slightly raise the front hood 104. This action has the effect of softening the impact on pedestrians who come in contact with the front hood 104.

FIG. 2 is a diagram illustrating an example of an enlarged view of the pedestrian protection airbag device 100 of FIG. 1(b) from above. The airbag cushion 114 is bag shaped and formed by overlapping and sewing or adhering a plurality of base fabrics configuring a front surface thereof, by spinning and weaving using an OPW (one-piece woven), or the like.

The inflators 112a, 112b are disposed on the front end side of the airbag cushion 114 along the vehicle width direction. The inflators 112a, 112b are secured to the inside of the housing 116 using a stud bolt (not illustrated), and are activated by an impact detection signal sent from a predetermined sensor so as to supply gas to the airbag cushion 114. The airbag cushion 114 begins to expand due to the gas from the inflators 112a, 112b, the expansion pressure or the like splits the housing 116, and the cushion expands and deploys toward the windshield 108.

The inflators 112a, 112b in the present example are a cylinder type. Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any type of inflator can be used as the inflators 112a, 112b.

In the present embodiment, the expansion region of the airbag cushion 114 into which gas flows and which expands is broadly divided into a main expansion part 118 and a pair of protruding expansion parts 120a, 120b.

The main expansion part 118 receives gas from the inflators 112a, 112b, and expands and deploys so as to cover the lower part of the windshield 108 from the left side A-pillar 110a to the right side A-pillar 110b in the vehicle width direction, thereby broadening the area for receiving and stopping the body of a pedestrian.

In the present embodiment, the main expansion part 118 is divided into a first main expansion part 118a and a second main expansion part 118b. The first main expansion part 118a and the second main expansion part 118b are divided into left and right sections so as to be mutually adjacent at an intermediate position in the vehicle width direction. The main expansion part 118 is divided into the first main expansion part 118a and second main expansion part 118b, thereby forming a valley 122 at a center position in the vehicle width direction. Thus, the airbag cushion 114 is divided into two left and right sections, which allows the airbag cushion to be more finely folded and rolled up for more compact storage.

The main expansion region 118 can be configured to lift the rear end vicinity of the front hood 104 from below, or can be configured to expand and deploy so as to overlap on the upper side of the rear end vicinity of the front hood 104. If the main expansion region 118 lifts the vicinity of the rear end of the front hood 104, the front hood 104 can be raised to soften the impact of a pedestrian coming into contact with the front hood 104.

The pair of protruding expansion portions 120a, 120b are provided on both end sides of the main expansion portion 118 in the vehicle width direction so as to protrude upward along the A-pillars 110a, 110b. The protruding expansion parts 120a, 120b expand and deploy to cover the A-pillars 110a, 110b when gas is received from the first main expansion part 118a and second main expansion part 118b, thus preventing the head and the like of a pedestrian from contacting the rigid A-pillars 110a, 110b.

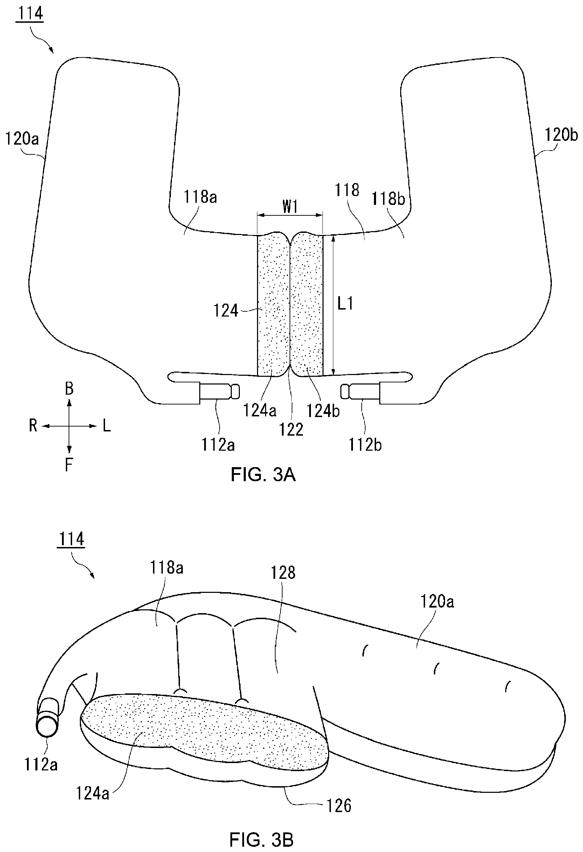

FIG. 3 is a diagram illustrating an example of a high friction part 124 of the airbag cushion 114 of FIG. 2 from various directions. FIG. 3(a) illustrates the high friction part 124 from the same direction as FIG. 2. The high friction part 124 is a region with a higher coefficient of friction than another outer front surface of the airbag cushion 114. Note that the coefficient of friction of the high friction part 124 can be evaluated by either the coefficient of dynamic friction or coefficient of static friction.

The airbag cushion 114 includes at least a back surface side panel 126 (see FIG. 3(b)) that contacts the windshield 108 (see FIG. 2) and a front surface side panel 128 on an opposite side from the back surface side panel 126. In the present embodiment, the high friction part 124 is formed in a region in the vicinity of the valley 122 at the center position in the vehicle width direction of the front surface side panel 128, with a first high friction part 124a formed in the first main expansion part 118a and a second high friction part 124b in the second main expansion part 118b.

FIG. 3(b) is a diagram illustrating an example of the first main expansion part 118a from the valley 122 side in FIG. 3(a). As described above, the first high friction part 124a is formed in a region on the valley 122 side of the front surface side panel 128 of the first main expansion part 118a. The first high friction part 124a is formed in the vicinity of the valley 122 along with the second high friction part 124b.

Herein, the first high friction part 124a and the second high friction part 124b are formed respectively on end surface parts of the first main expansion part 118a and the second main expansion part 118b facing each other at the valley 122 in the intermediate position of the main expansion part 118. Thereby, in addition to preventing misalignment of the first main expansion part 118a and second main expansion part 118b (see FIG. 3(a)), a function is provided of preventing the head of a pedestrian or the like from slipping through the valley 122.

As described above, the airbag cushion 114 is able to improve pedestrian protection performance while achieving more compact storage by dividing the main expansion part 118 into the first main expansion part 118a and the second main expansion part 118b. In particular, the high friction part 124 makes it difficult for the adjacent first main expansion part 118a and second main expansion part 118b to become displaced, thereby reducing wobbling during expansion and deployment. Furthermore, even if the head of a pedestrian or the like enters the valley, the first high friction part 124a and the second high friction part 124b stop the head from sliding by sandwiching from both sides, thus preventing the head from bottoming out on the vehicle side. Thereby, the present embodiment can provide a pedestrian protection airbag device 100 that achieves both ease of storage and pedestrian protection performance.

The high friction part 124 illustrated in FIG. 3(a) can be formed by applying resin in a range that includes the vicinity of the end part of the front surface side panel 128 at the intermediate position in the vehicle width direction to provide a resin layer with a high coefficient of friction. In general, a panel of the airbag cushion may be coated with resin in order to enhance heat resistance and wear resistance. The high friction part 124 can be formed by providing a resin layer only in a region in the vicinity of the valley 122, or by providing a thicker resin layer in the region in the vicinity of the valley 122 than a resin layer formed on the other outer front surfaces of the airbag cushion 114. This configuration makes it possible to suitably achieve the high friction part 124.

As another configuration, the high friction part 124 may be formed by attaching a patch formed of a material different from the panel forming the airbag cushion 114 in the region in the vicinity of the valley 122. The patch material has a higher coefficient of friction than the other outer front surfaces of the airbag cushion 114. This type of patch can also suitably provide the high friction part 124.

The high friction part 124 is set to have a smaller dimension W1 in the vehicle width direction than a dimension L1 in the front-rear direction. According to this configuration, by limiting the installation range of the high friction part 124 to only necessary locations, it is possible to prevent an excessively high friction force on a pedestrian or the like and to reduce the installation cost of a high friction part 124.

Note that in the present embodiment, the position where the main expansion part 118 is divided into the first main expansion part 118a and the second main expansion part 118b may be at a location along a center line C1 in the vehicle width direction, or may be at a location biased to the left or right from the center line C1. In other words, the intermediate position of the main expansion part 118 where the valley 122 is provided is a region that has some width on both left and right sides of the vehicle in the width direction, and can, as an example, be biased to half a range E1 from the center line C1 in the vehicle width direction to an end part of the vehicle in the vehicle width direction.

Modified Example

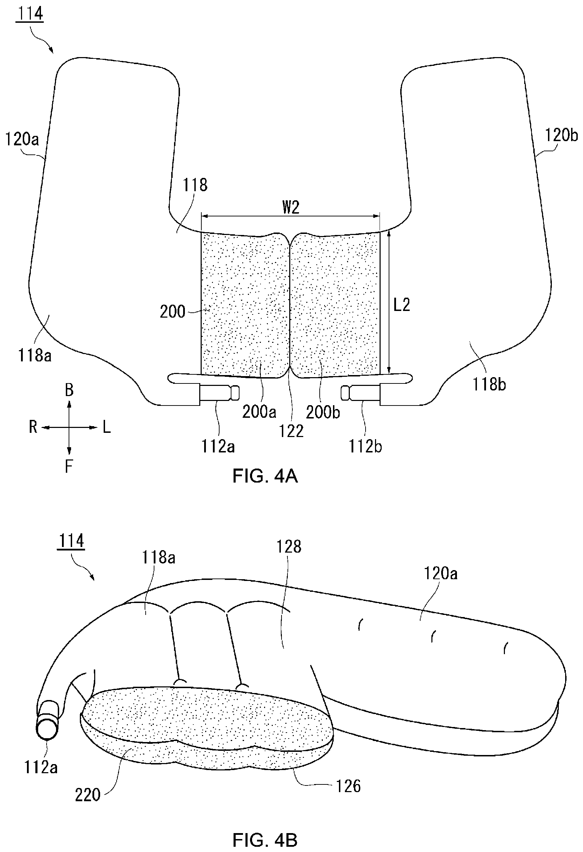

FIG. 4 is a diagram illustrating a modified example of the high friction part 124 of FIG. 3. In FIG. 4, the same symbols are attached to the same structural elements as those described above, and a description of the aforementioned structural elements is omitted. In the following description, components having the same name as a component already described are assumed to have the same function unless otherwise specified, even if marked with a different sign.

FIG. 4(a) illustrates a first modified example (high friction part 200) of the high friction part 124 in FIG. 3(a). The high friction part 200 includes a first high friction part 200a on the first main expansion part 118a side and a second high friction part 200b on the second main expansion part 118b side. The high friction part 200 is set to have a larger dimension W2 in the vehicle width direction than a dimension L2 in the front-rear direction. According to this configuration, even for a pedestrian of a behavior moving in the vehicle width direction on the airbag cushion 114, the high friction part 200 over a wide range in the vehicle width direction can stop and restrain the head of the pedestrian or the like from sliding so as to not slip through the valley.

FIG. 4(b) illustrates a second modified example (high friction part 220) of the high friction part 124 in FIG. 3(b). The high friction part 220 is also formed in each of the first main expansion part 118a and second main expansion part 118b (see FIG. 3(a)). The high friction part 220 is formed in a range that includes the vicinity of an end part at an intermediate position in the vehicle width direction on both the front surface side panel 128 and the back surface side panel 126 of the first main expansion part 118a. The high friction part 220 is also formed on each of the end surface parts of the first main expansion part 118a and second main expansion part 118b facing each other at the valley 122 (see FIG. 2 and the like). These configurations effectively prevent the head of a pedestrian and the like from entering the valley 122 between the first main expansion part 118a and second main expansion part 118b, and allow for more adequate protection of pedestrians.

Note that as yet another modified example of the high friction part, which is not part of the present invention, a high friction part may be provided only on the back surface side panel 126 of the main expansion part 118. Providing the high friction part only in the vicinity of the valley 122 at the intermediate position of the back surface side panel 126 also prevents the airbag cushion 114 from sliding on the windshield 108 or the like, and prevents the head of a pedestrian from slipping through the valley 122.

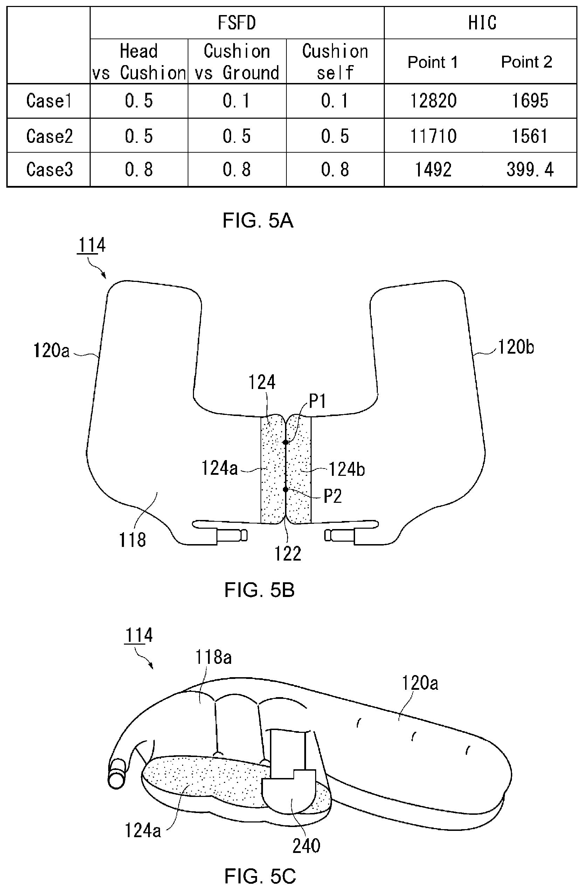

FIG. 5 shows analysis results of an impactor test performed on the airbag cushion 114 of FIG. 3(a). FIG. 5(a) shows an example of analysis results, and FIGS. 5(b) and 5(c) are schematic diagrams illustrating an impactor test from various directions. An impactor is an impact device that mimics a human head, which is employed in the testing of the airbag cushion 114. In the test, the head injury criterion (HIC) was analyzed on a computer when an impactor 240 was impacted by the airbag cushion 114.

FSFD (Friction Static and Friction Dynamic) in the upper left column of FIG. 5(a) refers to the coefficient of static friction and coefficient of dynamic friction. Of these, Head vs Cushion refers to the coefficient of friction between the impactor head 240 (see FIG. 5(c)) and the airbag cushion 114, where the higher the value, the harder it is for the impactor head 240 to slip through the valley 122. Cushion vs Ground refers to the coefficient of friction between the airbag cushion 114 and a vehicle body, where the higher the value, the harder it is for the airbag cushion 114 to become displaced off the windshield 108 or the like. Cushion self refers to the coefficient of friction between the airbag cushion 114 itself, where the higher the value, the harder it is for the first main expansion part 118a and second main expansion part 118b to rub against each other.

Note that as a general definition, the coefficient of friction is a dimensionless quantity defined as the ratio of a frictional force to a normal force, often expressed by the Greek letter $\mu$. The coefficient of friction can range from near 0 to greater than 1, depending on the combination of materials. Both the coefficient of static friction and coefficient of dynamic friction depend on the combination of materials in contact. For example, ice placed on steel has a low coefficient of friction, while rubber placed on a paved road has a high coefficient of friction. A coefficient of friction greater than 1 merely means that the force required to make an object slide is greater than the normal force acting on a contact surface, and in most practical cases, $\mu < 1$. For example, the coefficient of friction between rubber and another material can take values between 1 and 2. The coefficient of friction of a surface coated with silicone or acrylic rubber is much greater than 1.

In cases 1 to 3, the respective coefficients of friction are varied to gradually increase, and the results of the analysis (simulation) are shown on the right. The HIC in the upper right column refers to the head injury criterion value described above. The HIC values were measured from a synthetic acceleration of the impactor using Equation 1 below.

$$HIC = (t_2 - t_1) \left\{ \frac{\int_{t_1}^{t_2} a(t)dt}{t_2 - t_1} \right\}^{2.5} \ \dots \text{(Equation 1)}$$

$t_1$: Arbitrary time during acceleration response
$t_2$: Arbitrary time during acceleration response
However, $t_2 > t_1$
a(t): Acceleration

In FIG. 5(a), Point 1 and Point 2 show values when the impactor head 240 is impacted at an impact position P1 higher than the center of the valley 122 of the main expansion part 118 illustrated in FIG. 5(b) and at an impact position P2 lower than the center, respectively. From this test, it was confirmed that by gradually increasing each coefficient of friction in the order of cases 1 to 3, the head injury criterion value also decreased in order.

From the above, it was discovered that the higher the respective coefficient of friction in the airbag cushion 114, the lower the HIC and more favorable the performance. In other words, the harder it was for the impactor head 240 to slip through the valley 122 (see FIG. 5(c)), the harder it was for the windshield 108 and airbag cushion 114 to become displaced. Moreover, the harder it was for the first main expansion part 118a and second main expansion part 118b (see FIG. 5(b)) to rub against each other, the more favorable the results.

The above confirms the effectiveness of forming the high friction part 124 on the front surface side panel 128, as in the airbag cushion 114 in FIG. 2, to make it difficult for the head of a pedestrian to slip through the valley 122, or forming the high friction part 220 on the back surface side panel 126, as in the airbag cushion 114 in FIG. 4(b), to make it difficult for the airbag cushion 114 to become displaced on the windshield 108, as well as providing on both the front surface side panel 128 and the back surface side panel 126 as with the high friction part 220 to make it difficult for the first main expansion part 118a and the second main expansion part 118b to become displaced.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person with ordinary skill in the art can conceive various changed examples or modified examples within the scope described in the scope of the claims.

## INDUSTRIAL APPLICABILITY

The present invention can be used as a pedestrian protection airbag device having an airbag cushion that expands and deploys from below a front hood of a vehicle toward a windshield.

## DESCRIPTION OF CODES

100... Pedestrian protection airbag device, 102... Vehicle, 104... Front hood, 106... Front bumper, 108... Windshield, 110a, 110b... A-pillar, 112a, 112b... Inflator, 114... Airbag cushion, 116... Housing, 118... Main expansion part, 118a... First main expansion part, 118b... Second main expansion part, 120a, 120b... Protruding expansion part, 122... Valley, 124... High friction part, 124a... First high friction part, 124b... Second high friction part, 126... Back surface side panel, 128... Front surface side panel, 200... High friction part of first modified example, 200a... First high friction part, 200b... Second high friction part, 220... High friction part of second modified example, 240... Impactor head, C1... Center line of vehicle, L1... Dimension of high friction part in front-rear direction, L2... Dimension of high friction part in front-rear direction, P1, P2... Impact position of impactor head, W1... Dimension of high friction part in vehicle width direction, W2... Dimension of high friction part in vehicle width direction

## Claims

1. A pedestrian protection airbag device (100), comprising: an airbag cushion (114) that expands and deploys from below a front hood (104) of a vehicle (102) toward a windshield (108) and includes a back surface side panel (126) at least contacting the windshield (108) and a front surface side panel (128) on an opposite side from the back surface side panel (126); and an inflator (112a,112b) that supplies gas to the airbag cushion (114); wherein the airbag cushion (114) includes:

   a main expansion part (118) covering at least a lower part of the windshield (108) from one of a pair of A-pillars (110a,110b) to the other of the pair of A-pillars (110a,110b) in the vehicle (102); and
   a pair of protruding expansion parts (120a,120b) protruding upward from the main expansion part (118) along each of the pair of A-pillars (110a,110b), so as to cover the A-pillars (110a,110b),
   the main expansion part (118) includes a first main expansion part (118a) and a second main expansion part (118b), which are divided into left and right sections so as to be mutually adjacent at an intermediate position in a vehicle width direction of the vehicle, **characterized in that**
   the airbag cushion (114) further includes a high friction part (124,200,220) formed in a range that at least includes the vicinity of an end part of the front surface side panel (128) of each of the first main expansion part (118a) and second main expansion part (118b) at an intermediate position in the vehicle width direction and which has a higher coefficient of friction than another outer front surface of the airbag cushion (114), wherein the high friction part (124,200,220) is further formed in a range that includes the vicinity of an end part of the intermediate position of the back surface side panel (126) in the vehicle width direction, wherein
   the high friction part (124,200,220) is further formed on each end surface part of the first main expansion part (118a) and the second main expansion part (118b) facing each other at the intermediate position, wherein
   the high friction part (124,200,220) has a smaller dimension in the vehicle width direction than the dimension in the front-rear direction, wherein
   the main expansion part (118) is divided into the first main expansion part (118a) and second main expansion part (118b), thereby forming a valley (122) .at a center position in vehicle width direction, wherein
   the high friction part (124,200,220) is formed in a region in the vicinity of the valley (122) at the center position in the vehicle width direction of the front surface side panel (128).

2. The pedestrian protection airbag device (100) according to claim 1, wherein a resin layer with a higher coefficient of friction than the other outer front surfaces of the airbag cushion is formed in the high friction part (124,200,220).

3. The pedestrian protection airbag device (100) according to any one of claims 1 or 2, wherein a patch with a higher coefficient of friction than the outer front surface of the other outer front surface of the airbag cushion (114) is attached to the high friction part (124,200,220).

**EP 4 253 164 B1**

**Patentansprüche**

1. Fußgängerschutz-Airbagvorrichtung (100), umfassend: ein Airbagkissen (114), das sich von unterhalb einer Fronthaube (104) eines Fahrzeugs (102) zu einer Windschutzscheibe (108) hin ausdehnt und entfaltet und eine Rückoberflächenseitenplatte (126), die mindestens die Windschutzscheibe (108) berührt, und eine Frontoberflächenseitenplatte (128) auf einer gegenüberliegenden Seite von der Rückoberflächenseitenplatte (126) einschließt; und einen Gasgenerator (112a, 112b), der dem Airbagkissen (114) Gas zuführt; wobei das Airbagkissen (114) einschließt:

   einen Hauptausdehnungsteil (118), der mindestens einen unteren Teil der Windschutzscheibe (108) von einer eines Paares von A-Säulen (110a, 110b) zu der anderen des Paares von A-Säulen (110a, 110b) in dem Fahrzeug (102) abdeckt; und

   ein Paar hervorstehender Ausdehnungsteile (120a, 120b), die von dem Hauptausdehnungsteil (118) entlang jedem des Paars von A-Säulen (110a, 110b) nach oben hervorstehen, um die A-Säulen (110a, 110b) abzudecken,

   der Hauptausdehnungsteil (118) einen ersten Hauptausdehnungsteil (118a) und einen zweiten Hauptausdehnungsteil (118b) einschließt, die einen linken und einen rechten Abschnitt unterteilt sind, um in einer Zwischenposition in einer Fahrzeugbreitenrichtung des Fahrzeugs aneinander angrenzend zu sein, **dadurch gekennzeichnet, dass**

   das Airbagkissen (114) ferner einen Teil (124, 200, 220) mit hoher Reibung einschließt, der in einem Bereich ausgebildet ist, der mindestens die Nähe eines Endteils der Frontoberflächenseitenplatte (128) von jedem des ersten Hauptausdehnungsteils (118a) und des zweiten Hauptausdehnungsteils (118b) an einer Zwischenposition in der Fahrzeugbreitenrichtung einschließt, und der einen höheren Reibungskoeffizienten als eine andere äußere Frontoberfläche des Airbagkissens (114) aufweist, wobei der Teil (124, 200, 220) mit hoher Reibung ferner in einem Bereich ausgebildet ist, der die Nähe eines Endteils der Zwischenposition der Rückoberflächenseitenplatte (126) in der Fahrzeugbreitenrichtung einschließt, wobei

   der Teil (124, 200, 220) mit hoher Reibung ferner an jedem Endoberflächenteil des ersten Hauptausdehnungsteils (118a) und des zweiten Hauptausdehnungsteils (118b) ausgebildet ist, die einander in der Zwischenposition gegenüberliegen, wobei

   der Teil (124, 200, 220) mit hoher Reibung eine kleinere Abmessung in der Fahrzeugbreitenrichtung als die Abmessung in der Front-Heck-Richtung aufweist, wobei

   der Hauptausdehnungsteil (118) in den ersten Hauptausdehnungsteil (118a) und den zweiten Hauptausdehnungsteil (118b) unterteilt ist, wodurch eine Mulde (122) an einer Mittelposition in Fahrzeugbreitenrichtung ausgebildet ist, wobei

   der Teil (124, 200, 220) mit hoher Reibung in einer Region in der Nähe der Mulde (122) an der Mittelposition in Fahrzeugbreitenrichtung der Frontoberflächenseitenplatte (128) ausgebildet ist.

2. Fußgängerschutz-Airbagvorrichtung (100) nach Anspruch 1, wobei eine Harzschicht mit einem höheren Reibungskoeffizienten als die anderen äußeren Frontoberflächen des Airbagkissens in dem Teil (124, 200, 220) mit hoher Reibung ausgebildet ist.

3. Fußgängerschutz-Airbagvorrichtung (100) nach einem der Ansprüche 1 oder 2, wobei ein Flicken mit einem höheren Reibungskoeffizienten als die äußere Frontoberfläche der anderen äußeren Frontoberfläche des Airbagkissens (114) an dem Teil (124, 200, 220) mit hoher Reibung angebracht ist.

**Revendications**

1. Dispositif formant sac gonflable pour piéton (100), comprenant : un coussin de sac gonflable (114) qui s'étend et se déploie depuis le dessous d'un capot avant (104) d'un véhicule (102) vers un pare-brise (108) et comporte un panneau latéral de surface arrière (126) entrant au moins en contact avec le pare-brise (108) et un panneau latéral de surface avant (128) sur un côté opposé au panneau latéral de surface arrière (126) ; et un générateur de gaz (112a, 112b) qui alimente en gaz le coussin de sac gonflable (114) ; dans lequel le coussin de sac gonflable (114) comporte :

   une partie extension principale (118) recouvrant au moins une partie inférieure du pare-brise (108) à partir d'un montant de porte d'une paire de montants de porte (110a, 110b) jusqu'à l'autre montant de porte de la paire de montants de porte (110a, 110b) dans le véhicule (102) ; et

une paire de parties extensions saillantes (120a, 120b) faisant saillie vers le haut à partir de la partie extension principale (118) le long de chaque montant de porte de la paire de montants de porte (110a, 110b), de manière à recouvrir les montants de porte (110a, 110b),

la partie extension principale (118) comporte une première partie extension principale (118a) et une seconde partie extension principale (118b), lesquelles sont divisées en sections gauche et droite de manière à être mutuellement adjacentes à une position intermédiaire dans une direction de largeur de véhicule du véhicule, **caractérisé en ce que**

le coussin de sac gonflable (114) comporte en outre une partie à friction élevée (124, 200, 220) formée dans une plage comportant au moins la proximité d'une partie extrémité du panneau latéral de surface avant (128) de chacune parmi la première partie extension principale (118a) et la seconde partie extension principale (118b) à une position intermédiaire dans la direction de largeur de véhicule et ayant un coefficient de friction supérieur à celui d'une autre surface avant extérieure du coussin de sac gonflable (114), dans lequel la partie à friction élevée (124, 200, 220) est en outre formée dans une plage comportant la proximité d'une partie extrémité de la position intermédiaire du panneau latéral de surface arrière (126) dans la direction de largeur de véhicule, dans lequel

la partie à friction élevée (124, 200, 220) est en outre formée sur chaque partie surface d'extrémité de la première partie extension principale (118a) et de la seconde partie extension principale (118b) se faisant respectivement face dans la position intermédiaire, dans lequel

la pièce à friction élevée (124, 200, 220) a une dimension plus petite dans la direction de largeur de véhicule que la dimension dans la direction avant-arrière, dans lequel

la partie extension principale (118) est divisée en une première partie extension principale (118a) et en une seconde partie extension principale (118b), formant ainsi une vallée (122) au niveau d'une position centrale dans une direction de largeur de véhicule, dans lequel

la partie à friction élevée (124, 200, 220) est formée dans une région à proximité de la vallée (122) au niveau de la position centrale dans la direction de largeur de véhicule du panneau latéral de surface avant (128).

2. Dispositif formant sac gonflable pour piéton (100) selon la revendication 1, dans lequel une couche de résine ayant un coefficient de friction supérieur à celui des autres surfaces avant extérieures du coussin de sac gonflable est formée dans la partie à friction élevée (124, 200, 220).

3. Dispositif formant sac gonflable pour piéton (100) selon l'une quelconque des revendications 1 ou 2, dans lequel une pièce ayant un coefficient de friction supérieur à celui de la surface avant extérieure de l'autre surface avant extérieure du coussin de sac gonflable (114) est fixée à la partie à friction élevée (124, 200, 220).

FIG. 1A

FIG. 1B

FIG. 2

FIG. 3A

FIG. 3B

FIG. 4A

FIG. 4B

| | FSFD | | | HIC | |
|---|---|---|---|---|---|
| | Head vs Cushion | Cushion vs Ground | Cushion self | Point 1 | Point 2 |
| Case1 | 0.5 | 0.1 | 0.1 | 12820 | 1695 |
| Case2 | 0.5 | 0.5 | 0.5 | 11710 | 1561 |
| Case3 | 0.8 | 0.8 | 0.8 | 1492 | 399.4 |

FIG. 5A

FIG. 5B

FIG. 5C

**EP 4 253 164 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007196795 A